# EUROPÄISCHE PATENTSCHRIFT

(11) **EP 3 921 129 B1**
(45) Veröffentlichungstag und Bekanntmachung des Hinweises auf die Patenterteilung: **05.10.2022**
(21) Anmeldenummer: 21700288.0
(22) Anmeldetag: 11.01.2021
(51) Int. Cl.: B29C 44/34, B29C 44/58

(54) **VERFAHREN ZUR HERSTELLUNG VON GESCHÄUMTEN FLÄCHIGEN FORMKÖRPERN UND EIN WERKZEUG ZUR DURCHFÜHRUNG DES VERFAHRENS**
METHOD FOR THE PREPARATION OF FOAMED FLAT MOULDED BODIES AND TOOL FOR PERFORMING THE METHOD
PROCÉDÉ DE FABRICATION DE CORPS MOULÉS PLATS MOUSSÉS ET OUTIL PERMETTANT LA MISE EN OEUVRE DUDIT PROCÉDÉ

(30) Priorität: 17.01.2020 EP 20152534
(43) Veröffentlichungstag der Anmeldung: 15.12.2021
(73) Patentinhaber: Covestro Deutschland AG, 51373 Leverkusen (DE)
(72) Erfinder: HOPF, Stefan, 40789 Monheim (DE); MOERS, Stephan, 41379 Brüggen (DE); WICK, Achim, 51069 Köln (DE); WINDECK, Christian, 41751 Viersen (DE)
(74) Vertreter: Levpat
(86) Internationale Anmeldenummer: PCT/EP2021/050371
(87) Internationale Veröffentlichungsnummer: WO 2021/144218

(56) Entgegenhaltungen:
- WO-A1-2018/162372
- DE-A1-102014 202 890
- KR-B1- 100 684 809
- US-A1- 2006 103 042

## Beschreibung

Die Erfindung betrifft ein Verfahren zur Herstellung von geschäumten flächigen Polyurethan(PUR)-/Polyisocyanurat(PIR)-Formkörpern, wobei ein Polyurethan-/Polyisocyanurat-Reaktivgemisch in eine unter erhöhtem Druck stehende Form injiziert wird, danach eine Druckentspannung erfolgt, wodurch der Schäumprozess induziert wird, und der Formkörper nach der Reaktion entformt wird, und ein Werkzeug zur Durchführung des Verfahrens.

Geschäumte, offenzellige und flächige Formkörper eignen sich hervorragend als Kernmaterialien für z.B. Vakuumisolationspaneele (VIP). Diese sind hervorragende thermische Isolatoren, deren Isolierwirkung insbesondere durch ein Vakuum innerhalb der Paneele erzeugt wird. Das Kollabieren des Paneels unter Vakuum wird durch das Kernmaterial wie z.B. eine Polyurethan-/Polyisocyanurat-Matrix mit weitestgehend offenen Schaumzellen verhindert. Typische Anwendungsbeispiele für geschäumte flächige Formkörper sind Metallpaneele und Isoboards zur Gebäudeisolierung und Wandungen von Kühlgeräten. Vakuumisolationspaneele kommen besonders verbreitet bei der thermischen Isolierung von Kühlgeräten, beispielsweise bei Haushaltskühlschränken, zum Einsatz. Eine Fertigungsvariante im Stand der Technik sieht z.B. vor, dass das Ausgangsgemisch bestehend aus Polyol, Isocyanat, Additiven und überkritischem CO₂ oder unter Druck gesetztem Treibmittel zur Bildung der Polyurethan-/Polyisocyanurat-Matrix in ein mit Gas (z.B. Luft oder Stickstoff) gefülltes und mit Überdruck beaufschlagtes Werkzeug injiziert wird. Der Überdruck wird anschließend über eine kontrollierte Druckentspannung abgebaut, wodurch das im flüssigen PUR/PIR-Reaktivgemisch gelöste Treibmittel verdampft und der Schäumprozess startet. Über die Wahl der geeigneten Entspannungsparameter können die Schaumentstehung und wichtige Eigenschaften des Schaums wie z.B. Zellstruktur beeinflusst werden, was sich wiederum auf die thermischen und mechanischen Eigenschaften der VIP auswirkt.

Eine Druckentspannung zur Erzeugung eines Schaums ist vielfach in der Literatur beschrieben:
WO18/162372 offenbart ein Verfahren gemäß dem Oberbegriff des Anspruchs 1 und eine Vorrichtung gemäß dem Oberbegriff des Anspruchs 4, sie beschreibt ein Verfahren zur Herstellung offenzelliger und sehr feinzelliger PUR/PIR-Hartschäume. Die Verfahrensschritte bestehen aus dem Einbringen des Reaktionsgemisches mit überkritischem CO₂ als Treibmittel in eine Form, dem Aufschäumen in der Form und dem Entformen. In einer bevorzugten Ausprägung steht die Form unter Innendruck, welche nach der Injektion kontrolliert entspannt wird. Die Entspannung geschieht innerhalb von 1 bis 40 s mit Druckentspannungsraten bis 90 bar/s.

WO11/085847 A1 beschreibt die Herstellung eines Schaumstoffformkörpers mit gewünschten anisotropen Formgedächtniseigenschaften sowie den Schaumstoffformkörper selbst. Der erzeugte Formkörper enthält wenigstens ein Formgedächtnispolymer, das eine Schaumstruktur aufweist. Die Zellen sind asymmetrisch ausgerichtet (Aspektverhältnis > 2) und orientieren sich im Wesentlichen in einer Raumrichtung. Die mit Treibmittel versetzte Polymerschmelze (z.B. TPU) in einer Formkörperkavität erreicht eine asymmetrische Zellorientierung mit Formgedächtniseffekt durch Freisetzen des Treibmittels bei einer Druckentspannung einer Druckkammer. Die Druckentspannung wird über Ventile gestartet und erfolgt mit bis zu 25 bar/s. Es wird weiterhin ausgeführt, dass die Formkörperkavität innerhalb der Druckkammer zu jener Seite offen ist, in die der Schaum hauptsächlich wachsen soll. Entsprechend der Zellorientierung des Schaums ergeben sich anisotrope mechanische Eigenschaften im Formkörper. Der Prozess der Druckentspannung und dessen Einfluss auf die Schaumorientierung werden nicht genauer beschrieben, insbesondere der Einfluss der Kavitätsgeometrie auf das Strömungsverhalten des Schaums bei der Druckentspannung wird nicht berücksichtigt.

WO13/075991 A1 beschreibt ein Verfahren zur Herstellung von nanoporösen Polymerschaumstoffen aus thermoplastischem Polymer mit überkritischem Treibmittel und sehr hohen Druckentspannungsraten (15.000 bis 2.000.000 MPa/s). Schritte des Verfahrens sind die Beladung eines thermoplastischen Polymers mit einem überkritischen Treibmittel, die Temperierung der beladenen Polymerschmelze, eine Druckentspannung sowie die mögliche Zerkleinerung des Schaums zu Schaumstoffpartikeln. Die Druckentspannung kann vorzugsweise kontinuierlich im Extruder oder diskontinuierlich im Autoklaven erfolgen. Beim kontinuierlichen Prozess findet die Druckentspannung an einer Düsenplatte mit engen Düsen statt, durch die die Schmelze gedrückt wird. Der Druckverbraucher ist somit gleichzeitig formgebend für die Schmelze. In der diskontinuierlichen Variante im Autoklaven erfolgt die Druckentspannung über Ventile, Berstscheiben oder Volumenzunahme der Kavität. Auf eine Beschreibung zur Einstellung der Zellgrößen und Zellorientierung insbesondere hervorgerufen durch die Geometrie der Form und dem Anschluss an die Druckentspannung (z.B. Ventil) wird verzichtet. In diesem Verfahren sind ein superkritisches Treibmittel sowie sehr hohe Druckentspannungsraten erforderlich, was die Prozessführung einschränkt.

WO 2007/099445 A2 beschreibt die Herstellung eines Formschaumkörpers mittels einer Form. Bei der Entlüftung des Werkzeugs wird die Entlüftungsstelle zur Umgebung durch ein vom aufsteigenden Schaum bewegtes Klappenelement geschlossen. Da die Klappe zur Umgebung beim Injizieren des Polymergemisches nicht geschlossen ist, kann die Kavität nicht unter Überdruck stehen, wobei ein Überdruck für die Kontrolle des Aufschäumens und der Zellorientierung vorteilhaft wäre.

WO18/222714 A1 beschreibt die Injektion einer einphasigen Lösung aus einer Polymerkomposition und einem Gas in eine unter Überdruck stehende Form sowie die Druckentspannung zur Herstellung eines Schaums. Die Druckentspannung wird entweder über eine Volumenerweiterung oder über einen Druckregler realisiert.

WO2015/183639 A1 beschreibt ein Werkzeug und eine Prozessführung, bei der die Expansion des Schaums (=Volumenexpansion) in der Form durch eine Vergrößerung des Kavitätsvolumens mittels einer beweglichen Wand der Form und inhärenter Druckentspannung erfolgt. Der Prozess sieht die Injektion einer Polymermischung in eine unter Druck stehende Kavität sowie die Druckentspannung durch kontrolliertes Verfahren einer Wand ähnlich eines Kolbens vor. Bewegliche Teile sind nachteilhaft, da diese insbesondere bei unter Druck stehenden Prozessen anfällig für Undichtigkeiten und undefinierten Druckabfall sind und zusätzliche Antriebe benötigen. Weiterhin ist keine Berücksichtigung aufgeführt, wie die Orientierung der Zellen über die Einstellung der Druckentspannung beeinflusst werden kann.

Aufgabe war es, ein Verfahren bzw. ein Werkzeug zur Verfügung zu stellen, mit dem es auf einfache Weise gelingt, eine vollständige Füllung der Kavität zu ermöglichen und Inhomogenitäten im Schaum wie z.B. Vorzugsorientierungen oder eine starke Anisotropie der Schaumzellen in bestimmten Bereichen des Formkörpers zu reduzieren, da sich eine höhere Homogenität der Zellstruktur positiv auf die wesentlichen Bauteileigenschaften wie thermische Isolationsfähigkeit und mechanische Stabilität auswirkt. Hierbei sollte sich die Herstellungszeit im Vergleich zu dem Stand der Technik entsprechenden Verfahren nicht verlängern.

Diese Aufgabe konnte überraschenderweise durch das im Folgenden beschriebene Verfahren und das im Folgenden beschriebene Werkzeug gelöst werden.

Gegenstand der Erfindung ist ein Verfahren zur Herstellung von geschäumten flächigen Polyurethan-/Polyisocyanurat (PUR/PIR)-Formkörpern mit einer Dicke (LF2) in einer Kavität eines Werkzeugs, welches einen Einlassbereich, eine Kavität und eine Druckentspannungseinheit aufweist, wobei das Verfahren folgende Schritte umfasst:
i) Injizieren eines Polyurethan-/Polyisocyanuratreaktivgemisches durch mindestens eine Einlassöffnung im Einlassbereich in die unter einem Startdruck von 5 bar bis 40 bar, bevorzugt von 6 bar bis 30 bar, besonders bevorzugt von 7 bar bis 25 bar stehende Kavität des Werkzeugs,
ii) Durchführen einer Druckentspannung in der Kavität mit einer Dauer von 0,1 bis 10 Sekunden, bevorzugt 0,2 bis 2 Sekunden, mittels mindestens eines Ventils in der Druckentspannungseinheit auf Atmosphärendruck oder auf einen gegenüber dem Startdruck geringeren Druck von 1 bar bis 5 bar, bevorzugt von 1 bar bis 2 bar, nach dem Injizieren des Polyurethan-/Polyisocyanuratreaktivgemisches, wobei das Reaktivgemisch entlang einer Hauptströmungsrichtung vom Einlassbereich durch die Kavität zur Druckentspannungseinheit schäumt,
iii) Aushärten, Abkühlen und Entformen des geschäumten flächigen Polyurethan-/Polyisocyanuratformkörpers,
dadurch gekennzeichnet, dass
die Kavität zwei lange Dimensionen (LF1) und (LF3) und eine im Vergleich dazu kurze Dimension (LF2) aufweist und eine der langen Dimensionen (LF3) die Hauptströmungsrichtung des Schaums darstellt,
die Kavität mindestens eine Wand (A3) in der durch die Dimensionen (LF1) und (LF2) aufgespannten Ebene oder mindestens einen Teil (K2) einer Wand (A2) in der durch die Dimensionen (LF1) und (LF3) aufgespannten Ebene aufweist, wobei der Teil (K2) einer Wand (A2) der Fläche entspricht, die sich in der Dimension (LF3) über das dem Einlassbereich gegenüberliegende Zehntel der Wand (A2) erstreckt und wobei die mindestens eine Wand (A3) oder der mindestens eine Teil (K2) einer Wand (A2) mindestens eine Öffnung (340), die die Kavität (100) und die Druckentspannungseinheit (300) verbindet, aufweist,
das Verhältnis der Summe der Flächen der mindestens einen Öffnung zu der Fläche der sie aufweisenden Wand (A3) oder des sie aufweisenden Teils (K2) einer Wand (A2) 1:20 bis 1:100 ist,
die mindestens eine Öffnung eine Länge (LS1) in Richtung der langen Dimension (LF1) der Kavität aufweist, und
das Verhältnis der Länge beziehungsweise der Summe der Längen der mindestens einen Öffnung (LS1) zur Länge der Kavität (LF1) größer als 1:4, bevorzugt größer als 1:2, besonders bevorzugt größer 3:4 ist.

Die Dimensionen (LF1) bzw. (LF3) sind jeweils größer als (LF2). Dass die Dimension (LF2) im Vergleich zu den Dimensionen LF1 und LF3 kurz ist, bedeutet im Sinne dieser Anmeldung, dass sie höchstens jeweils halb so lang ist wie LF1 und LF3. Bevorzugt ist das Verhältnis von (LF1) zu (LF2) sowie das Verhältnis von (LF3) zu (LF2) unabhängig voneinander jeweils größer 3, besonders bevorzugt größer 6.

Die die Kavität mit der Druckentspannungseinheit verbindenden Öffnungen haben bevorzugt ein Aspektverhältnis von mindestens 2, besonders bevorzugt von mindestens 5.

Die Hauptströmungsrichtung des Reaktivgemisches entspricht vorzugsweise der Hauptausdehnung der Kavität.

Bevorzugt befindet sich die mindestens eine Öffnung in einer Wand (A3), die dem die Einlassöffnung aufweisenden Bereich in Hauptströmungsrichtung gegenüber liegt.

Die mindestens eine Öffnung kann sich aber auch in einer anderen Wand befinden. Dann befindet sie sich bevorzugt in einem Teil (K2) einer anderen Wand, wobei der Teil (K2) dem Bereich entspricht, der sich in der Dimension (LF3) über das der Einlassöffnung gegenüberliegende Zehntel der Dimension (LF3) erstreckt. Auch dann schließt sich eine Druckentspannungseinheit an die mindestens eine Öffnung an.

Die Fläche A einer Wand W entspricht im Sinne dieser Anmeldung der Grundfläche der Wand. So weist beispielsweise eine rechteckige Wand mit den Kanten a und b der Länge 1 m bzw. 2 m eine Fläche A = a ^{∗} b = 2 m² auf, unabhängig von eventuell vorhandenen Öffnungen in der Wand W.

Die Dauer der Druckentspannung entspricht im Sinne dieser Erfindung der Zeitdauer, in der der Druck in der Kavität von einem hohen Druck auf einen niedrigen Druck gesenkt wird.

Bevorzugt findet das Durchführen der Druckentspannung 0 bis 20 Sekunden nach dem Injizieren des Polyurethan-/Polyisocyanuratreaktivgemisches statt.

Das Werkzeug ist temperierbar. Übliche Temperaturen des Werkzeugs liegen zwischen 20 und 80 °C.

Der Einlassbereich kann unterschiedlich gestaltet sein. Beispielsweise kann ein zentraler Anguss, insbesondere mit Prallplatte vorgesehen sein oder ein Schirmanguss oder ein Kleiderbügelanguss. Diese Angüsse sind an sich bekannt. Eine vorteilhafte Auslegung stellt ein Stangenanguss mit Umlenkung, Staubereich und konvergenter Querschnittsvergrößerung dar.

Ein weiterer Gegenstand der Erfindung ist ein Werkzeug zur Herstellung von geschäumten flächigen Polyurethan-/Polyisocyanurat-Formkörpern mit einer Dicke (LF2), das
(i) einen Einlassbereich mit mindestens einer Einlassöffnung (110, 210),
(ii) eine sich anschließende Kavität (100),
(iii) eine Druckentspannungseinheit mit mindestens einem Ventil (130, 310) aufweist,
dadurch gekennzeichnet, dass
die Kavität (100) zwei lange Dimensionen (LF1) und (LF3) und eine im Vergleich dazu kurze Dimension (LF2) aufweist,
die Kavität eine Wand (A3) in der durch die Dimensionen (LF1) und (LF2) aufgespannten Ebene oder einen Teil (K2) einer Wand (A2) in der durch die Dimensionen (LF1) und (LF3) aufgespannten Ebene aufweist, wobei der Teil (K2) einer Wand (A2) der Fläche entspricht, die sich in der Dimension (LF3) über das dem Einlassbereich gegenüberliegende Zehntel der Wand (A2) erstreckt und wobei die Wand (A3) oder der Teil (K2) einer Wand (A2) mindestens eine Öffnung (340), die die Kavität (100) und die Druckentspannungseinheit (300) verbindet, aufweist, das Verhältnis der Summe der Flächen der mindestens einen Öffnung zu der Fläche der sie aufweisenden Wand (A3) oder des sie aufweisenden Teils (K2) einer Wand (A2) 1:20 bis 1:100 ist,
die mindestens eine Öffnung (340) eine Länge (LS1) in Richtung der langen Dimension (LF1) der Kavität (100) aufweist,
das Verhältnis der Länge beziehungsweise der Summe der Längen der mindestens einen Öffnung (LS1) zur Länge (LF1) der Kavität (100) größer als 1:4, bevorzugt größer als 1:2, besonders bevorzugt größer 3:4 ist.

Unter "flächigen Formkörpern" sind in einer Kavität geformte Körper zu verstehen, deren eine Dimension im Vergleich zu den anderen beiden Dimensionen klein ist. Dies können Platten oder Rohre bzw. Hohlzylinder sein, wobei die Plattendicke bzw. Rohrwanddicke die im Vergleich zu den anderen beiden Dimensionen kleine Dimension darstellt. Die Plattendicke (LF2) kann entlang der Dimensionen (LF1) und (LF3) variabel sein und beispielsweise konturiert sein. Diese Konturen können z.B. der Geometrie der möglichen Anwendung entsprechen, z.B. der Geometrie einer Kühlschrankwandung.

Die Dimensionen (LF1) bzw. (LF3) der Kavität sind jeweils größer als (LF2). Bevorzugt ist das Verhältnis von (LF1) zu (LF2) sowie das Verhältnis von (LF3) zu (LF2) unabhängig voneinander jeweils größer 3, besonders bevorzugt größer 6.

Die die Kavität mit der Druckentspannungseinheit verbindende mindestens eine Öffnung weist bevorzugt ein Aspektverhältnis von mindestens 2, besonders bevorzugt von mindestens 5 auf.

Besonders bevorzugt handelt es sich bei den Öffnungen um Langlöcher, Spalte oder Schlitze. Diese Öffnungen weisen bevorzugt eine konstante Spaltbreite auf. Sie können jedoch auch ovalförmig, bananenförmig, konkav oder konvex sein und somit eine sich über die Länge des Spaltes veränderliche Breite aufweisen. Besonders bevorzugt besteht die mindestens eine Öffnung in der Wand (A3) zwischen Kavität und Druckentspannungseinheit aus einer einzigen Öffnung, welche sich über die gesamte Dimension (LF1) der Kavität erstreckt. Es können aber auch Kombinationen von Öffnungen sein, die in Richtung von (LF1) hintereinander und gegebenenfalls nebeneinander angeordnet sind, wie z.B. durch Stege voneinander getrennte Öffnungen. Weniger bevorzugt ist eine Kombination von Öffnungen mit einem Aspektverhältnis von etwa 1, wie z.B. runde oder leicht elliptische Öffnungen, die über die Länge (LF1) verteilt angeordnet sind. Über eine sich verändernde Spaltbreite bzw. die lokale Höhe eines gegebenenfalls vorhandenen Staubalkens (320) in der Druckentspannungseinheit (300) kann der Fließwiderstand des Schaums in der Kavität über die gesamte Länge (LF1) homogenisiert werden, was zu einem homogenen Geschwindigkeitsprofil der Gasströmung in der Kavität während der Druckentspannung führt. Dies wiederum führt dazu, dass der Schaum über die gesamte Länge (LF1) der Kavität gleichmäßig aufsteigt, was homogene Formkörpereigenschaften sowie das vollständige Ausschäumen der Kavität begünstigt.

Bevorzugt liegen die mindestens eine Öffnung in der Wand (A3) und der Staubereich mittig in der Kavitätsdicke (LF2).

Weiterhin wird durch einen Staubalken (320) ein erhöhter Fließwiderstand für den aufsteigenden Schaum aufgebaut, der zu einer gewünschten Kompaktierung des Schaums im Spalt des Staubalkens beiträgt und die Gefahr eines unkontrollierten Entweichens des Schaums verringert.

An den gegebenenfalls vorhandenen Staubalken (320) angeschlossen befindet sich vorzugsweise ein Überlaufbereich (330). Die Druckentspannungseinheit weist besonders bevorzugt einen Überlauf (330) auf, in dem das aus der mindestens einen Öffnung der Kavität gegebenenfalls austretende geschäumte Reaktivgemisch gesammelt werden kann. Dieses kann dann bei der Entnahme des Formkörpers mit entfernt werden. Der Überlaufbereich (330) verhindert ein Verschmutzen des dahinter angeordneten Ventils (310), ohne dass ein zusätzliches Sieb installiert und evtl. in regelmäßigen Abständen ersetzt oder gereinigt werden muss.

Es wurde gefunden, dass die Gestaltung der Druckentspannung während der Reaktion in der Form wichtig ist, um vorteilhafte Bauteileigenschaften zu erreichen. Das komprimierte Gas in der Form wird durch das erfindungsgemäße Verfahren bzw. das erfindungsgemäße Werkzeug kontrolliert und gleichmäßig aus der Formkavität geführt.

Durch das erfindungsgemäße Verfahren wird eine höhere Homogenität der Zellstruktur erreicht, ohne die Herstellungszeit verlängern zu müssen, insbesondere konnten unerwünschte Vorzugsorientierungen der Schaumzellen in Bereichen nahe der Druckentspannungseinheit bzw. des Ventils zur Druckentspannung deutlich reduziert werden. Weiterhin konnten Bauteile hergestellt werden, die die Kavität komplett ausfüllen. Bei nicht erfindungsgemäßer Position der die Kavität mit dem Druckentspannungsbereich verbindenden mindestens einen Öffnung wurden Lufteinschlüsse beobachtet.

Bevorzugt enthält das PUR/PIR-Reaktivgemisch eine Isocyanat-reaktive Komponente A), die vorzugsweise mindestens eine Polyolkomponente A1) ausgewählt aus der Gruppe bestehend aus Polyetherpolyolen, Polyesterpolyolen, Polyetheresterpolyolen, Polycarbonatpolyolen und Polyether-Polycarbonatpolyolen aufweist, sowie als Komponente B) ein Polyisocyanat.

Der Anteil an primären OH-Funktionen an der Gesamtzahl der endständigen OH-Funktionen aller in der Komponente A) eingesetzten Polyole beträgt bevorzugt mindestens 30%.

Die Polyolkomponente A1) hat vorzugsweise eine Funktionalität f von > 2,5. Mit Polyolformulierungen, in denen die Polyolkomponente A1) eine Funktionalität in diesem Bereich aufweist, wird beim Einspritzen ein optimaler Viskositätsanstieg bis zur Entspannung des Gegendrucks erhalten. Die Schäume lassen sich zudem schnell entformen.

Die Polyolkomponente A1) weist bevorzugt eine Hydroxylzahl von 280 bis 600 mg KOH/g auf. Dies wirkt sich besonders günstig auf die mechanischen Eigenschaften der Schäume aus.

Bei den oben genannten Polyetherpolyolen handelt es sich um die dem Fachmann bekannten, in der Polyurethan/Polyisocyanuratsynthese einsetzbaren Polyetherpolyole oder Mischungen aus unterschiedlichen Polyetherpolyolen.

Verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Bevorzugt enthält die Isocyanat-reaktive Komponente A) bezogen auf ihr Gesamtgewicht mindestens 50 Gew.-% Polyetherpolyol. Derartige Komponenten zeichnen sich durch besonders gute Hydrolysestabilität aus.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen oder deren Derivate sind zur Herstellung dieser Polyetheresterpolyole geeignet. Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Polyetheresterpolyole können auch durch die Alkoxylierung von Reaktionsprodukten, die durch die Umsetzung von organischen Dicarbonsäuren und deren Derivaten sowie Komponenten mit Zerewitinoff-aktiven Wasserstoffen erhalten werden, hergestellt werden.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Zur Herstellung der Polyesterpolyole kommen insbesondere auch biobasierte Ausgangsstoffe und/oder deren Derivate in Frage. Insbesondere bevorzugt sind Ester der Rizinolsäure mit mehrfunktionellen Alkoholen, z.B. Glycerin.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit CO₂ erhältlich sind.

Weiterhin können in der Isocyanat-reaktiven Komponente A) niedermolekulare Isocyanat-reaktive Verbindungen A2) enthalten sein, insbesondere können di- oder trifunktionelle Amine und Alkohole, mit Molmassen Mₙ kleiner als 400 g/mol zum Einsatz kommen.

Neben den oben beschriebenen Polyolen und Isocyanat-reaktiven Verbindungen können in der Komponente A) weitere Isocyanat-reaktive Verbindungen enthalten sein, beispielsweise Graft-Polyole, Polyamine, Polyaminoalkohole und Polythiole.

Eine bevorzugte Isocyanat-reaktive Komponente A) besteht zu mindestens 65 Gew.-%, insbesondere mindestens 80 Gew.-% und ganz besonders bevorzugt zu mehr als 90 Gew.-% aus der Polyolkomponente A1), die eine Hydroxylzahl von 280 bis 600 mg KOH/g und eine Funktionalität f ≥ 2,8 bis f ≤ 6,0 aufweist, und der Anteil an primären, endständigen OH-Funktionen in der Komponente A) beträgt mindestens 35% (bezogen auf alle endständigen OH-Funktionen in der Komponente A).

Die Komponente A) kann Hilfs- und Zusatzstoffe, wie beispielsweise zellöffnende Verbindungen, bevorzugt in Mengen von max. 1 Gew.-%, bezogen auf die Isocyanat-reaktive Komponente A), enthalten.

Weitere Hilfs- und Zusatzstoffe sind die aus dem Stand der Technik und dem Fachmann bekannten und üblichen Hilfs- und Zusatzstoffe; beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Für die Herstellung des PUR/PIR-Hartschaums werden bevorzugt auch Katalysatoren eingesetzt. Als Katalysatoren werden üblicherweise Verbindungen verwendet, welche die Reaktion der Hydroxylgruppen bzw. isocyanatreaktiven Gruppen enthaltenden Verbindungen der Komponenten mit den Isocyanatgruppen der Komponente B beschleunigen.

In der Herstellung des PUR/PIR-Hartschaums wird für die Schaumbildung eine Treibmittelkomponente verwendet. Diese wird in einer solchen Menge verwendet, wie sie zur Erzielung einer dimensionsstabilen Schaummatrix und der gewünschten Rohdichte nötig ist. Als Treibmittel werden vorzugsweise physikalische Treibmittel (wie z.B. Pentan) und/oder CO₂ im überkritischen Zustand eingesetzt. Zusätzlich zu oder statt der physikalischen Treibmittel können auch chemische Treibmittel (z.B. Wasser) verwendet werden.

Die Komponente B) ist ein Polyisocyanat, also ein Isocyanat mit einer NCO-Funktionalität von ≥ 2. Beispiele solcher Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(isocyanatocyclohexyl)methane) oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente B) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenylpolymethylen-polyisocyanate, d.h. Gemische der höherkernigen Homologen des Diphenylmethylen-diisocyanates, welche eine NCO - Funktionalität f > 2 aufweisen und folgende Strukturformel aufweisen: C₁₅H₁₀N₂O₂ [C₈H₅NO]ₙ, wobei n = ganze Zahl > 0 ist.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur mit eingesetzt werden.

Statt oder zusätzlich zu den oben genannten Polyisocyanaten können auch geeignete NCO-Präpolymere als organische Isocyanatkomponente B) eingesetzt werden. Die Präpolymere sind herstellbar durch Umsetzung eines oder mehrerer Polyisocyanate mit einem oder mehreren Polyolen, entsprechend den unter den Komponenten A1) beschriebenen Polyolen.

Die Anzahl der NCO-Gruppen in der Polyisocyanatkomponente B) und die Anzahl der gegenüber Isocyanaten reaktiven Gruppen der Komponente A) können beispielsweise in einem Zahlenverhältnis von ≥ 50:100 bis ≤ 500:100 zueinander stehen. Zur Herstellung der Polyurethan-Hartschaumstoffe werden in der Regel die Komponenten A) und B) in solchen Mengen zur Umsetzung gebracht, dass die Isocyanat-Kennzahl der Rezeptur 80 - 150 beträgt. Zur Herstellung von Schäumen mit einem hohen Anteil an Isocyanuratgruppen werden in der Regel die Komponenten A) und B) in solchen Mengen zur Umsetzung gebracht, dass die Isocyanat-Kennzahl der Rezeptur 150 - 400 beträgt.

Durch das erfindungsgemäße Verfahren lassen sich flächige PUR/PIR-Hartschaumformkörper mit einer Rohdichte von 25 bis 300 kg/m³ mit gleichzeitig vielen offenen und besonders kleinen Zellen erhalten. So können harte Schäume mit einer Offenzelligkeit von > 70% hergestellt werden, bei denen die Zellen einen durchschnittlichen Durchmesser von < 180 µm zeigen. Die Schäume weisen gute mechanische Eigenschaften, z.B. gute Druckfestigkeiten auf sowie geringe Wärmeleitfähigkeiten.

Bzgl. der Zusammensetzungen der bevorzugt eingesetzten PUR/PIR-Reaktivgemische wird insbesondere auf WO 2018162372 A1 verwiesen. Hier werden die PUR/PIR-Reaktivgemische, die bevorzugt eingesetzt werden, ausführlich beschrieben.

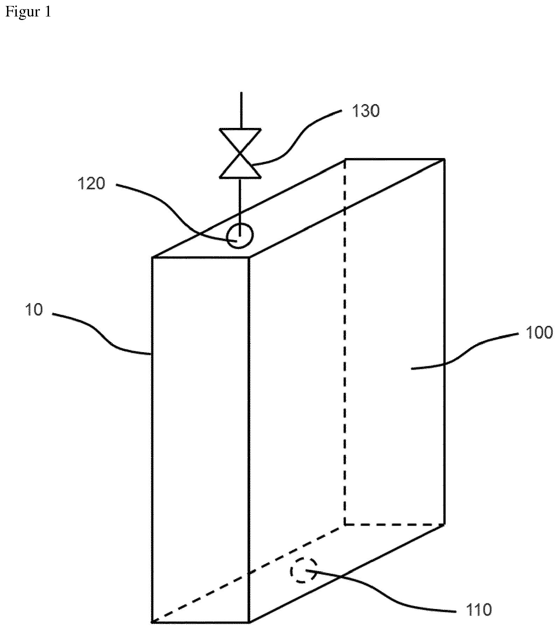

Die Figur 1 zeigt den prinzipiell bekannten Aufbau eines Werkzeugs (10), welches eine Kavität (100) aufweist. Derartige Werkzeuge sind an sich bekannt. Sie weisen eine Einlassöffnung (110) und ein Ventil (130) auf.

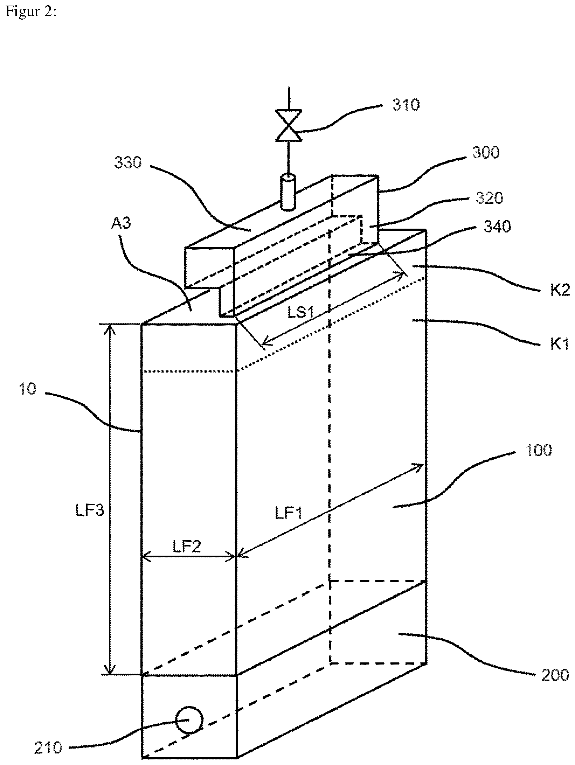

Aus der Figur 2 geht ein erfindungsgemäßes Werkzeug (10) hervor. Die Kavität (100) hat eine Breite (LF1) und eine Höhe (LF3) sowie eine Dicke (LF2). Die Kavität (100) weist eine Wand (A3) auf, die eine Öffnung (340) aufweist, die die Kavität (100) und die Druckentspannungseinheit (300) verbindet. Die in Figur 2 gezeigte Druckentspannungseinheit (300) hat ein Ventil (310), einen Staubalken (320) und einen Überlaufbereich (330).

Aus der Figur 2 geht weiterhin beispielhaft der Bereich K2 hervor, in dem sich die mindestens eine Öffnung bevorzugt befindet, wenn sie sich nicht in der Wand befindet, die dem die Einlassöffnung aufweisenden Bereich in Hauptströmungsrichtung gegenüber liegt.

Figur 3 zeigt die Wand (A3) der Kavität (100). Diese Wand (A3) enthält mehrere Öffnungen (340), die unterschiedliche Formen aufweisen. Die Öffnungen haben jeweils eine Länge (LS1) in Richtung der Länge (LF1) der Kavität (100).

Figur 4 zeigt das Ergebnis des Vergleichsbeispiels.

Figur 5 zeigt das Ergebnis des erfindungsgemäßen Beispiels.

Die Erfindung soll anhand der nachfolgenden Beispiele näher erläutert werden.

### Vergleichsbeispiel

Es wurden Schäume mit einem Werkzeug mit einer plattenförmigen Kavität aus dem Stand der Technik hergestellt, bei dem die Druckentspannung über ein Ventil erfolgte, das exzentrisch auf der Wand (A3) der Kavität über eine runde Öffnung zur Entlüftung angebracht war. Das Werkzeug wurde auf etwa 55 °C temperiert. Bei den Versuchen wurden die Polyolformulierung A (inkl. einer CO₂-Treibmittelbeladung) und die Isocyanatkomponente B (Zusammensetzung siehe Tabelle 1) mit einem Hochdruckmischkopf miteinander vermischt (Verfahrensparameter siehe Tabelle 1).

Das Injizieren der Mischung (Verfahrensschritt i)) erfolgte über eine runde Injektionsöffnung am Boden der Kavität gegen eine Prallplatte innerhalb von 2,5 s und bei etwa 160 bar und etwa 40 °C. Der Druck in der Kavität betrug in dieser Phase ca. 8 bar.

Nach 3,5 s Liegezeit erfolgte die Entspannung des Kavitätsdrucks auf Umgebungsdruck innerhalb von 2 s (Verfahrensschritt ii)). Durch die Entspannung expandierte das CO₂, der Schaum entstand und füllte die Kavität. Nach dem Auskühlen des Bauteils konnte dieses entformt werden (Verfahrensschritt iii)).

Der mit diesem Werkzeug und den unter Tabelle 1 beschriebenen Prozessbedingungen erzeugte geschäumte Formkörper zeigte ausgerichtete länglich geformte Zellen in Richtung der Öffnung. Die mittlere Dichte des Schaums betrug 81 kg/m³.

Das Verhältnis von Flächeninhalt der Öffnung zu Flächeninhalt der Wand betrug 1:13. Die Länge LS1 der Öffnung zur Länge LF1 der Kavität betrug 1:5,25.

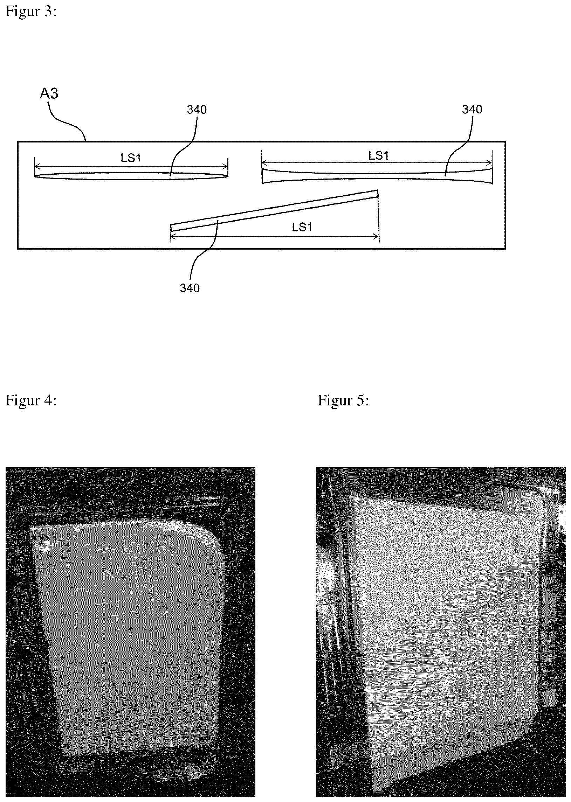

Die Kavität wurde trotz ausreichend injizierter Masse nicht vollständig vom Schaum ausgefüllt. Die dem Auslass gegenüberliegende Ecke der Wand A3 war nicht ausgefüllt (vgl. Figur 4).

Beispiel (erfindungsgemäß):
Der Vergleichsversuch wurde wiederholt, mit dem Unterschied, dass ein erfindungsgemäßes Werkzeug eingesetzt wurde. Es wurde das Werkzeug vergrößert, wobei insbesondere die Vergrößerung der Dimension LF1 den Prozess der Druckentspannung anspruchsvoller gegenüber dem Prozess im kleineren Werkzeug gestaltete. Dadurch war eine Anpassung verschiedener Verfahrensparameter (Druck, Schusszeit, Liegezeit) erforderlich, um vergleichbare Schaumeigenschaften, insbesondere eine vergleichbare Dichte, zu erzielen.

Das Injizieren erfolgte im Einlassbereich über einen Stangenanguss, der entlang der Kavitätsbreite (LF1) angelegt ist. Der Übergang vom Stangenanguss erfolgte über einen sich konvergent öffnenden Schlitz auf die vorgegebene Tiefe der Kavität (LF2). Das Gemisch wurde bei etwa 51 °C (Polyol) bzw. etwa 35 °C (Isocyanat) und einem Druck von etwa 155 bar injiziert. Die Form war auf 53 °C temperiert, die Kavität stand unter 8 bar Innendruck.

Die Druckentspannungseinheit des eingesetzten Werkzeugs wies eine schlitzförmige, zur Mitte schmaler werdende Öffnung zur Kavität auf. Das Verhältnis von Flächeninhalt der Öffnung zu Flächeninhalt der Wand betrug 915:50400 (1:55). Das Verhältnis der Länge LS1 der Öffnung zur Länge LF1 der Kavität betrug 1:1.

Die Schaumzellen im Formkörper waren nicht ausgerichtet und wiesen eine gleichmäßige Form sowie enge Größenverteilung auf. Die Kavität war komplett und gleichmäßig ausgefüllt (vgl. Figur 5).

**Tabelle 1:**

| Beispiel | Vergleichsbeispiel | Erfindungsgemäßes Beispiel |
|---|---|---|
| Isocyanat [Massenteile] | 97,19 | 97,19 |
| Polyol 1 [Massenteile] | 13 | 13 |
| Polyol 2 [Massenteile] | 32,50 | 32,50 |
| Polyol 3 [Massenteile] | 50 | 50 |
| Stabilisator [Massenteile] | 1,5 | 1,5 |
| Treibmittel CO₂ [Massenteile] | 5,16 | 5,16 |
| Zellöffner 1 [Massenteile] | 0,4 | 0,4 |
| Zellöffner 2 [Massenteile] | 0,1 | 0,1 |
| Katalysator 1 [Massenteile] | 2,5 | 2,5 |
| Katalysator 2 [Massenteile] | 1,65 | 1,65 |
| Druck Werkzeug [bar] | 8 | 8 |
| Druck Polyolseite [bar] | 164 | 155 |
| Druck Isocyanatseite [bar] | 159 | 159 |
| Temperatur Werkzeug [°C] | 55 | 53 |
| Temperatur Polyolseite [°C] | 47 | 51 |
| Temperatur Isocyanatseite [°C] | 35 | 35 |
| Schusszeit [s] | 2,5 | 3,4 |
| Liegezeit [s] | 3,5 | 1,6 |
| Zeit Druckentspannung [s] | 2 | 2 |
| Verhältnis Flächeninhalt Öffnung zu A3 | 1:13 | 1:55 |
| Verhältnis der Länge der Öffnung LS1 zu LF1 | (1:5,25) | 1:1 |
| Verhältnis LF1 zu LF2 | 210:80 | 630:80 |
| Verhältnis LF3 zu LF2 | 300:80 | 740:80 |
| Formdichte [kg/m³] | 81 | 80 |

Bei der Schusszeit handelt es sich im Sinne dieser Anmeldung um die Dauer des Injizierens.

Bei der Liegezeit handelt es sich im Sinne dieser Anmeldung um die Dauer zwischen Ende des Injizierens und Beginn der Druckentspannung.

Bei den in den Versuchen eingesetzten Chemikalien handelte sich um:
Isocyanat: Desmodur^{®}44V20L von Covestro Deutschland AG, Gemisch aus monomerem und polymerem MDI mit einer Viskosität zwischen 160-240 mPa·s (25 °C) und einem NCO-Gehalt von 30,5-32,5 Gew.-%.
Polyol 1: Polyetherpolyol auf Basis von Trimethylolpropan und Propylenoxid mit einer Hydroxylzahl von 800 mg KOH/g, einer Funktionalität von 3 und einer Viskosität von 6100 mPa·s bei 25 °C
Polyol 2: Polyetherpolyol auf Basis von Trimethylolpropan und Ethylenoxid mit einer Hydroxylzahl von 550 mg KOH/g, einer Funktionalität von 3 und einer Viskosität von 505 mPa·s bei 25 °C
Polyol 3: Mischung aus:
   - 27 Gew.-% Polyetherpolyol auf Basis von 1,2-Propandiol und Propylenoxid mit einer Hydroxylzahl von 56 mg KOH/g, einer Funktionalität von 2 und einer Viskosität von 310 mPa·s bei 25 °C
   - 19 Gew.-% Polyetherpolyol auf Basis von 1,2 Propandiol und Propylenoxid mit einer Hydroxylzahl von 112 mg KOH/g, einer Funktionalität von 2 und einer Viskosität von 140 mPa·s bei 25 °C
   - 54 Gew.-% Polyetherpolyol auf Basis von Glycerin und Propylenoxid mit einer Hydroxylzahl von 231 mg KOH/g, einer Funktionalität von 3 und einer Viskosität von 350 mPa·s bei 20 °C
Stabilisator: Tegostab^{®} B 8443, Schaumstabilisator von Evonik Industries AG, auf der Basis von Polyether-Polydimethylsiloxanen
Zellöffner 1: Ortegol 500 von Evonik Industries AG, organisches Polymer auf Basis von Polybutadien
Zellöffner 2: Ortegol 501 von Evonik Industries AG, Mischung aus aminstabilisierten, makromolekularen, ungesättigten Kohlenwasserstoffen mit Phthalsäureester Katalysator 1: Desmorapid 1792 von Covestro Deutschland AG, auf der Basis von Kaliumacetet in Diethylenglykol
Katalysator 2: Dabco NE1070 von Evonik Industries AG, auf der Basis von Dimethylaminopropylharnstoff

## Patentansprüche

1. Verfahren zur Herstellung von geschäumten flächigen Polyurethan-/Polyisocyanuratformkörpern mit einer Dicke (LF2) in einer Kavität (100) eines Werkzeugs (10), welches einen Einlassbereich, eine Kavität (100) und eine Druckentspannungseinheit (300) aufweist, wobei das Verfahren folgende Schritte umfasst:
i) Injizieren eines Polyurethan-/Polyisocyanuratreaktivgemisches durch mindestens eine Einlassöffnung (110, 210) im Einlassbereich in die unter einem Startdruck von 5 bar bis 40 bar, bevorzugt von 6 bar bis 30 bar, besonders bevorzugt von 7 bar bis 25 bar stehende Kavität (100) des Werkzeugs (10),
ii) Durchführen einer Druckentspannung in der Kavität (100) mit einer Dauer von 0,1 bis 10 Sekunden, bevorzugt 0,2 bis 2 Sekunden, mittels mindestens eines Ventils (310) in der Druckentspannungseinheit (300) auf Atmosphärendruck oder auf einen gegenüber dem Startdruck geringeren Druck von 1 bar bis 5 bar, bevorzugt von 1 bar bis 2 bar, nach dem Injizieren des Polyurethan-/Polyisocyanuratreaktivgemisches, wobei das Reaktivgemisch entlang einer Hauptströmungsrichtung vom Einlassbereich durch die Kavität (100) zur Druckentspannungseinheit (300) schäumt,
iii) Aushärten, Abkühlen und Entformen des geschäumten flächigen Polyurethan-/Polyisocyanuratformkörpers,
**dadurch gekennzeichnet, dass**
die Kavität zwei lange Dimensionen (LF1) und (LF3) und eine im Vergleich dazu kurze Dimension (LF2) aufweist und eine der langen Dimensionen (LF3) die Hauptströmungsrichtung des Schaums darstellt,
die Kavität (100) mindestens eine Wand (A3) in der durch die Dimensionen (LF1) und (LF2) aufgespannten Ebene oder mindestens einen Teil (K2) einer Wand (A2) in der durch die Dimensionen (LF1) und (LF3) aufgespannten Ebene aufweist, wobei der Teil (K2) einer Wand (A2) der Fläche entspricht, die sich in der Dimension (LF3) über das dem Einlassbereich gegenüberliegende Zehntel der Wand (A2) erstreckt und wobei die mindestens eine Wand (A3) oder der mindestens eine Teil (K2) einer Wand (A2) mindestens eine Öffnung (340), die die Kavität (100) und die Druckentspannungseinheit (300) verbindet, aufweist,
das Verhältnis der Summe der Flächen der mindestens einen Öffnung (340) zu der Fläche der sie aufweisenden Wand (A3) oder des sie aufweisenden Teils (K2) einer Wand (A2) 1:20 bis 1:100 ist,
die mindestens eine Öffnung (340) eine Länge (LS1) in Richtung der langen Dimension (LF1) der Kavität (100) aufweist, und
das Verhältnis der Länge (LS1) beziehungsweise der Summe der Längen (LS1) der mindestens einen Öffnung (340) zur Länge (LF1) der Kavität (100) größer als 1:4, bevorzugt größer als 1:2, besonders bevorzugt größer 3:4 ist.

2. Verfahren nach Anspruch 1, wobei das Verhältnis der langen Dimension (LF1) der Kavität (100) zur kurzen Dimension (LF2) sowie das Verhältnis der langen Dimension (LF3) der Kavität (100) zur kurzen Dimension (LF2) unabhängig voneinander jeweils größer als 3:1, bevorzugt größer als 6:1 ist.

3. Verfahren nach Anspruch 1 oder 2, wobei die die Kavität (100) mit der Druckentspannungseinheit (300) verbindende mindestens eine Öffnung (340) ein Aspektverhältnis von mindestens 2, besonders bevorzugt von mindestens 5 hat.

4. Werkzeug zur Herstellung von geschäumten flächigen Polyurethan-/Polyisocyanurat-Formkörpern mit einer Dicke (LF2), das
(i) einen Einlassbereich mit mindestens einer Einlassöffnung (110, 210),
(ii) eine sich anschließende Kavität (100),
(iii) eine Druckentspannungseinheit (300) mit mindestens einem Ventil (130, 310) aufweist,
**dadurch gekennzeichnet, dass**
die Kavität (100) zwei lange Dimensionen (LF1) und (LF3) und eine im Vergleich dazu kurze Dimension (LF2) aufweist,
die Kavität (100) mindestens eine Wand (A3) in der durch die Dimensionen (LF1) und (LF2) aufgespannten Ebene oder mindestens einen Teil (K2) einer Wand (A2) in der durch die Dimensionen (LF1) und (LF3) aufgespannten Ebene aufweist, wobei der Teil (K2) einer Wand (A2) der Fläche entspricht, die sich in der Dimension (LF3) über das dem Einlassbereich gegenüberliegende Zehntel der Wand (A2) erstreckt und wobei die mindestens eine Wand (A3) oder der mindestens eine Teil (K2) einer Wand (A2) mindestens eine Öffnung (340), die die Kavität (100) und die Druckentspannungseinheit (300) verbindet, aufweist,
das Verhältnis der Summe der Flächen der mindestens einen Öffnung (340) zu der Fläche der sie aufweisenden Wand (A3) oder des sie aufweisenden Teils (K2) einer Wand (A2) 1:20 bis 1:100 ist,
die mindestens eine Öffnung (340) eine Länge (LS1) in Richtung der langen Dimension (LF1) der Kavität (100) aufweist,
das Verhältnis der Länge (LS1) beziehungsweise der Summe der Längen (LS1) der mindestens einen Öffnung (340) zur Länge (LF1) der Kavität (100) größer als 1:4, bevorzugt größer als 1:2, besonders bevorzugt größer 3:4 ist.

5. Werkzeug nach Anspruch 4, wobei das Verhältnis der langen Dimension (LF1) der Kavität zur kurzen Dimension (LF2) sowie das Verhältnis der langen Dimension (LF3) der Kavität zur kurzen Dimension (LF2) unabhängig voneinander jeweils größer als 3:1, bevorzugt größer als 6:1 ist.

6. Werkzeug nach Anspruch 4 oder 5, wobei die die Kavität (100) mit der Druckentspannungseinheit (300) verbindende mindestens eine Öffnung (340) ein Aspektverhältnis von mindestens 2, besonders bevorzugt von mindestens 5 hat.

## Claims

1. Method for the production of foamed areal polyurethane/polyisocyanurate moldings with a thickness (LF2) in a cavity (100) of a mold (10), which has an inlet region, a cavity (100) and a depressurization unit (300), where the method comprises the following steps:
i) injection of a reactive polyurethane/polyisocyanurate mixture through at least one inlet aperture (110, 210) in the inlet region into the cavity (100) of the mold (10), said cavity being under an initial pressure of 5 bar to 40 bar, preferably of 6 bar to 30 bar, particularly preferably of 7 bar to 25 bar,
ii) after the injection of the reactive polyurethane/polyisocyanurate mixture, carrying out a depressurization in the cavity (100) with a duration of 0.1 to 10 seconds, preferably 0.2 to 2 seconds, by means of at least one valve (310) in the depressurization unit (300), to atmospheric pressure or to a pressure which is lower than the initial pressure and which is 1 bar to 5 bar, preferably 1 bar to 2 bar, where the reactive mixture foams along a main flow direction from the inlet region through the cavity (100) to the depressurization unit (300),
iii) hardening, cooling and demolding of the foamed areal polyurethane/polyisocyanurate molding,
**characterized in that**
the cavity has two long dimensions (LF1) and (LF3) and one dimension (LF2) that is short in comparison therewith, and one of the long dimensions (LF3) represents the main flow direction of the foam,
the cavity (100) has at least one wall (A3) in the plane which contains the dimensions (LF1) and (LF2), or has at least one portion (K2) of a wall (A2) in the plane which contains the dimensions (LF1) and (LF3), where the portion (K2) of a wall (A2) corresponds to the area which extends in the dimension (LF3) across that one-tenth part of the wall (A2) that is opposite to the inlet region, and where the at least one wall (A3) or the at least one portion (K2) of a wall (A2) has at least one aperture (340) which connects the cavity (100) and the depressurization unit (300),
the ratio of the sum of the areas of the at least one aperture (340) to the area of the wall (A3) comprising said aperture or of the portion (K2) of a wall (A2), where said portion (K2) comprises said aperture, is 1:20 to 1:100,
the at least one aperture (340) has a length (LS1) in the direction of the long dimension (LF1) of the cavity (100), and
the ratio of the length (LS1) and, respectively, of the sum of the lengths (LS1) of the at least one aperture (340) to the length (LF1) of the cavity (100) is greater than 1:4, preferably greater than 1:2, particularly preferably greater than 3:4.

2. Method according to Claim 1, where the ratio of the long dimension (LF1) of the cavity (100) to the short dimension (LF2), and also the ratio of the long dimension (LF3) of the cavity (100) to the short dimension (LF2) is respectively mutually independently greater than 3:1, preferably greater than 6:1.

3. Method according to Claim 1 or 2, where the at least one aperture (340) connecting the cavity (100) to the depressurization unit (300) has an aspect ratio of at least 2, particularly preferably of at least 5.

4. Mold for the production of foamed areal polyurethane/polyisocyanurate moldings with a thickness (LF2), where said mold has
(i) an inlet region with at least one inlet aperture (110, 210),
(ii) an adjacent cavity (100),
(iii) a depressurization unit (300) with at least one valve (130, 310),
**characterized in that**
the cavity (100) has two long dimensions (LF1) and (LF3) and one dimension (LF2) that is short in comparison thereto,
the cavity (100) has at least one wall (A3) in the plane which contains the dimensions (LF1) and (LF2), or has at least one portion (K2) of a wall (A2) in the plane which contains the dimensions (LF1) and (LF3), where the portion (K2) of a wall (A2) corresponds to the area which extends in the dimension (LF3) across that one-tenth part of the wall (A2) that is opposite to the inlet region, and where the at least one wall (A3) or the at least one portion (K2) of a wall (A2) has at least one aperture (340) which connects the cavity (100) and the depressurization unit (300),
the ratio of the sum of the areas of the at least one aperture (340) to the area of the wall (A3) comprising said aperture or of the portion (K2) of a wall (A2), where said portion (K2) comprises said aperture, is 1:20 to 1:100,
the at least one aperture (340) has a length (LS1) in the direction of the long dimension (LF1) of the cavity (100),
the ratio of the length (LS1) and, respectively, of the sum of the lengths (LS1) of the at least one aperture (340) to the length (LF1) of the cavity (100) is greater than 1:4, preferably greater than 1:2, particularly preferably greater than 3:4.

5. Mold according to Claim 4, where the ratio of the long dimension (LF1) of the cavity to the short dimension (LF2), and also the ratio of the long dimension (LF3) of the cavity to the short dimension (LF2) is respectively mutually independently greater than 3:1, preferably greater than 6:1.

6. Mold according to Claim 4 or 5, where the at least one aperture (340) connecting the cavity (100) to the depressurization unit (300) has an aspect ratio of at least 2, particularly preferably of at least 5.

## Revendications

1. Procédé de fabrication de corps moulés plats moussés de polyuréthane/polyisocyanurate ayant une épaisseur (LF2) dans une cavité (100) d'un outil (10), qui présente une zone d'entrée, une cavité (100) et une unité de détente de pression (300), le procédé comprenant les étapes suivantes :
i) l'injection d'un mélange réactif de polyuréthane/polyisocyanurate à travers au moins une ouverture d'entrée (110, 210) dans la zone d'entrée dans la cavité (100) de l'outil (10) se trouvant sous une pression de départ de 5 bar à 40 bar, de préférence de 6 bar à 30 bar, de manière particulièrement préférée de 7 bar à 25 bar,
ii) la réalisation d'une détente de pression dans la cavité (100) d'une durée de 0,1 à 10 secondes, de préférence de 0,2 à 2 secondes, au moyen d'au moins une soupape (310) dans l'unité de détente de pression (300) à la pression atmosphérique ou à une pression inférieure de 1 bar à 5 bar, de préférence de 1 bar à 2 bar, par rapport à la pression de départ, après l'injection du mélange réactif de polyuréthane/polyisocyanurate, le mélange réactif moussant le long d'une direction d'écoulement principale depuis la zone d'entrée à travers la cavité (100) jusqu'à l'unité de détente de pression (300),
iii) le durcissement, le refroidissement et le démoulage du corps moulé plat moussé de polyuréthane/polyisocyanurate,
**caractérisé en ce que**
la cavité présente deux dimensions longues (LF1) et (LF3) et une dimension courte en comparaison (LF2) et l'une des dimensions longues (LF3) constitue la direction d'écoulement principale de la mousse,
la cavité (100) présente au moins une paroi (A3) dans le plan défini par les dimensions (LF1) et (LF2) ou au moins une partie (K2) d'une paroi (A2) dans le plan défini par les dimensions (LF1) et (LF3), la partie (K2) d'une paroi (A2) correspondant à la surface qui s'étend dans la dimension (LF3) sur le dixième de la paroi (A2) opposé à la zone d'entrée, et l'au moins une paroi (A3) ou l'au moins une partie (K2) d'une paroi (A2) présentant au moins une ouverture (340), qui relie la cavité (100) et l'unité de détente de pression (300),
le rapport entre la somme des surfaces de l'au moins une ouverture (340) et la surface de la paroi (A3) qui la présente ou de la partie (K2) d'une paroi (A2) qui la présente est de 1:20 à 1:100,
l'au moins une ouverture (340) présente une longueur (LS1) dans la direction de la dimension longue (LF1) de la cavité (100), et
le rapport entre la longueur (LS1) ou la somme des longueurs (LS1) de l'au moins une ouverture (340) et la longueur (LF1) de la cavité (100) est supérieur à 1:4, de préférence supérieur à 1:2, de manière particulièrement préférée supérieur à 3:4.

2. Procédé selon la revendication 1, le rapport entre la dimension longue (LF1) de la cavité (100) et la dimension courte (LF2) ainsi que le rapport entre la dimension longue (LF3) de la cavité (100) et la dimension courte (LF2) étant chacun indépendamment l'un de l'autre supérieurs à 3:1, de préférence supérieurs à 6:1.

3. Procédé selon la revendication 1 ou 2, l'au moins une ouverture (340) reliant la cavité (100) à l'unité de détente de pression (300) ayant un rapport d'aspect d'au moins 2, de manière particulièrement préférée d'au moins 5.

4. Outil pour la fabrication de corps moulés plats moussés de polyuréthane/polyisocyanurate ayant une épaisseur (LF2), qui présente
(i) une zone d'entrée avec au moins une ouverture d'entrée (110, 210),
(ii) une cavité (100) qui s'y raccorde,
(iii) une unité de détente de pression (300) avec au moins une soupape (130, 310),
**caractérisé en ce que**
la cavité (100) présente deux dimensions longues (LF1) et (LF3) et une dimension courte en comparaison (LF2), la cavité (100) présente au moins une paroi (A3) dans le plan défini par les dimensions (LF1) et (LF2) ou au moins une partie (K2) d'une paroi (A2) dans le plan défini par les dimensions (LF1) et (LF3), la partie (K2) d'une paroi (A2) correspondant à la surface qui s'étend dans la dimension (LF3) sur le dixième de la paroi (A2) opposé à la zone d'entrée, et l'au moins une paroi (A3) ou l'au moins une partie (K2) d'une paroi (A2) présentant au moins une ouverture (340), qui relie la cavité (100) et l'unité de détente de pression (300),
le rapport entre la somme des surfaces de l'au moins une ouverture (340) et la surface de la paroi (A3) qui la présente ou de la partie (K2) d'une paroi (A2) qui la présente est de 1:20 à 1:100,
l'au moins une ouverture (340) présente une longueur (LS1) dans la direction de la dimension longue (LF1) de la cavité (100),
le rapport entre la longueur (LS1) ou la somme des longueurs (LS1) de l'au moins une ouverture (340) et la longueur (LF1) de la cavité (100) est supérieur à 1:4, de préférence supérieur à 1:2, de manière particulièrement préférée supérieur à 3:4.

5. Outil selon la revendication 4, le rapport entre la dimension longue (LF1) de la cavité et la dimension courte (LF2) ainsi que le rapport entre la dimension longue (LF3) de la cavité et la dimension courte (LF2) étant chacun indépendamment l'un de l'autre supérieurs à 3:1, de préférence supérieurs à 6:1.

6. Outil selon la revendication 4 ou 5, l'au moins une ouverture (340) reliant la cavité (100) à l'unité de détente de pression (300) ayant un rapport d'aspect d'au moins 2, de manière particulièrement préférée d'au moins 5.
